# NEW EUROPEAN PATENT SPECIFICATION

(11) **EP 0 536 837 B2**
(45) Date of publication and mention of the opposition decision: **06.03.2002**
(45) Mention of the grant of the patent: 20.08.1997
(21) Application number: 92203012.7
(22) Date of filing: 01.10.1992
(51) Int. Cl.: A01J 7/00, A01J 7/02, A01J 7/04

(54) **An implement for milking animals**
Gerät zum Melken von Tieren
Dispositif de traite d'animaux

(30) Priority: 04.10.1991 NL 9101676; 13.02.1992 NL 9200258
(43) Date of publication of application: 14.04.1993
(73) Proprietor: Maasland N.V., 3155 ZG Maasland (NL)
(72) Inventor: Van den Berg, Karel, NL-2971 BR Bleskensgraaf (NL); Fransen, René, NL-3135 ZD Vlaardingen (NL)
(74) Representative: Corten, Maurice Jean F.M.

(56) References cited:
- EP-A- 0 332 235
- EP-A- 0 309 036
- EP-A- 0 332 231
- EP-A- 0 476 771
- FR-A- 2 559 351

## Description

The present invention relates to an implement for milking animals, such as cows, automatically, which implement is provided with a first cleaning device for automatically cleaning teat cups, a second cleaning device for cleaning the teats of an animal to be milked.

Such an implement is known from the European patent application 0 309 036. In this document there is described a second cleaning device which comprises a brush which, during cleaning, is rotated and simultaneously moved forwards and backwards below the udder. After cleaning the udder, the brush is brought into a rest position and taken out of this position if an udder has to be cleaned. The above mentioned cleaning device has the disadvantage that after a while it becomes contaminated and has to be cleaned or has to be replaced.

It is an object of the present invention to overcome these disadvantages or at least to minimize them.

According to the invention, this is achieved by the features of claim 1. Using the cleaning means, it is possible, after cleaning of the teats with the second cleaning device, to clean the second cleaning device itself, so that a following animal will be worked upon with the second cleaning device under highly hygienic conditions. The working under these conditions may contribute to the fact that the somatic cell count of the milk is relatively low and that the risk of infection by e.g. mastitis between the animals is extremely low. Furthermore, after cleaning of the teats by the cleaning elements, these cleaning elements can be stored away in the housing.

In accordance with a further preferred feature of the invention, in the housing there are arranged one or a plurality of rinsing members, by means of which a rinsing liquid can be brought in the housing, as well as one or a plurality of brushes. During cleaning of the cleaning elements in the housing there is sprayed a rinsing liquid against the cleaning elements, while at the same time the cleaning elements may rotate against the brushes.

In order to effect a proper positioning of the first cleaning device and the second cleaning device relative to the housing, according to the invention, the housing may be provided with positioning means which also serve as locking elements. By means of the positioning means, the first cleaning device and the second cleaning device, each time when the cleaning elements are stored away in the housing, are brought into and maintained in a pre-defined position relative to the housing. Thus, when applied in a milking robot, the position of the first cleaning device and the second cleaning device is relatively simple to define, in order that an arm of the milking robot will be able to retrace the first cleaning device and the second cleaning device each time in the same position again. Such an implement may include a milking parlour having at at least one of its longitudinal sides a fixed frame having a first, upper frame portion to which a milking robot for the automatic milking of animals is attached, as well as a second, lower frame portion, against which the milking robot bears and along whose underside arms of the milking robot can be moved to under the animal present in the milking parlour, while furthermore the milking robot includes a carrier frame for the further portions of the milking robot, which carrier frame can be moved along the upper frame portion. In this situation, the first cleaning device may be secured to the carrier frame of the milking robot. More specifically, the further portions of the milking robot may include a robot arm, on which teat cups have been provided, whereas the first cleaning device or third cleaning device are connected in such a location to the carrier frame that, when the milking robot is not operative for milking, the teat cups can be connected to the first cleaning device by an upward movement. Consequently, according to a still further preferred feature of the invention, the mutual spacing between the teat cups is equal to that between the spray nozzles of the first cleaning device.

In a preferred embodiment according to the invention, the robot arm includes an after-treating device for after-treating the udder and/or the teats of a milked animal.

For a better understanding of the invention and to show how the same may be carried into effect, reference will now be made, by way of example, to the embodiment shown in the accompanying drawings, in which:
Figure 1 is a side view of an implement for automatic milking of animals, in which the first cleaning device of the invention is incorporated;
Figure 2 is a plan view of a portion of the implement shown in Figure 1, in which the first cleaning device in accordance with the invention is shown in a plan view;
Figure 3 is a side view of the spray nozzles of the first cleaning device in accordance with the invention;
Figure 4 is a cross-sectional view of a spray nozzle connected to a teat cup;
Figure 5 is a side view of an alternative first cleaning device with spray nozzles in accordance with the invention;
Figure 6 is a portion of the alternative first cleaning device according to the arrow VI-VI in Figure 5;
Figure 7 is a cross-section according to the arrow VII-VII in Figure 5;
Figure 8 is a portion of the alternative first cleaning device according to Figure 5, seen in the direction according to the arrow VIII-VIII;
Figure 9 is a plan view of the alternative first cleaning device according to Figure 5;
Figure 10 is a side view of part of an implement in one embodiment according to the invention, which implement is provided with a first cleaning device as well as with a second cleaning device for cleaning the teats of the udder of an animal to be milked;
Figure 11 shows the implement of Figure 10, located on the robot arm of the implement of Figure 1, as well as a third cleaning device for cleaning the second cleaning device in Figure 10;
Figure 12 is a plan view of the implement according to Figure 11;
Figure 13 is a side view according to the line XIII-XIII of a portion of the implement shown in Figure 12;
Figure 14 is a cross-section according to the line XIV-XIV in Figure 13;
Figure 15 is a plan view of the implement according to Figure 13;
Figure 16 shows a diagram of an after-treating implement for after-treating the udder and/or the teats after the milking of an animal, it having been indicated schematically how the implement has been built up;
Figure 17 shows an after-treating implement according to Figure 16 incorporated in the implement of Figure 12, and indicated to an enlarged scale according to the line XVII-XVII in Figure 12.

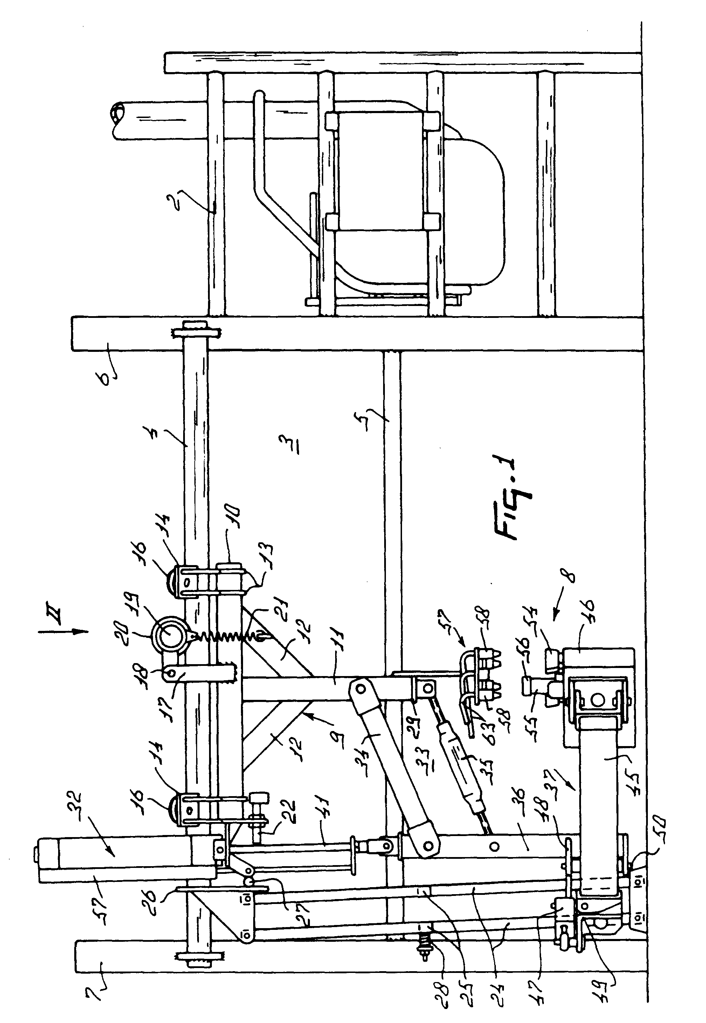

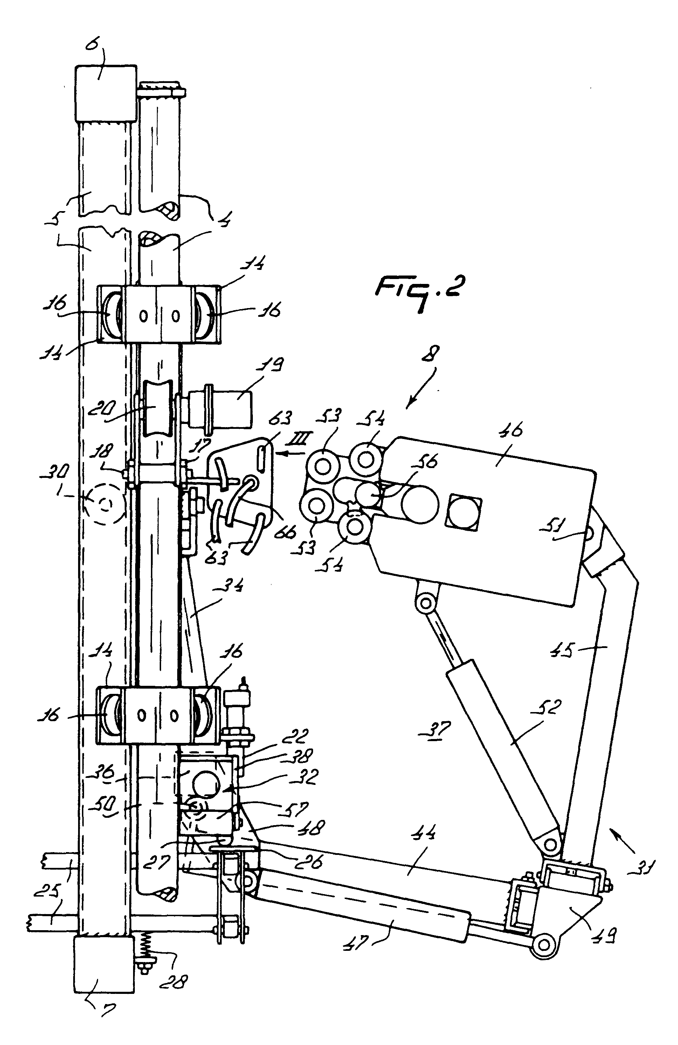

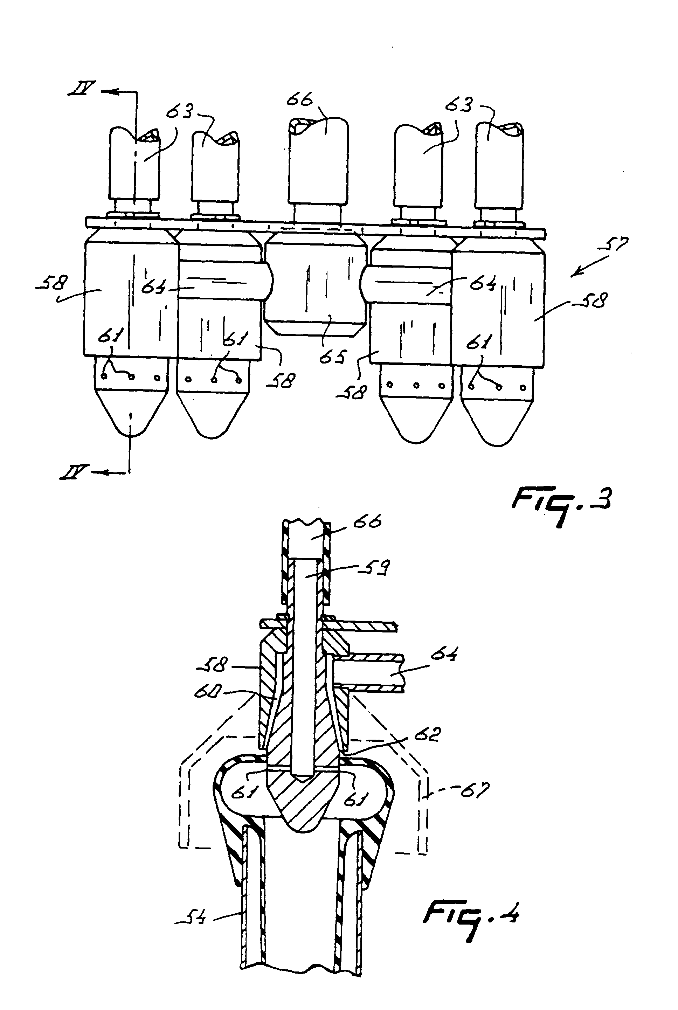

The implement as illustrated in Figures 1 and 2 includes a milking parlour 1 surrounded by a railing 2 which allows the animal a limited freedom of movement. The milking parlour can be entered by the animal from the lateral side at the rear end, whilst the animal can leave same again from this side at the leading end. Since the leading end of the milking parlour is provided with a feeding plant, the cow will advance sufficiently far and arrive in a position in which it can easily be milked. At the longitudinal side of the milking parlour other than the one in which the entrance and exit are located there is provided a fixed frame 3 which forms part of the railing 2, the said frame 3 including a first frame portion 4 and a second frame portion 5. The first frame portion 4 extends parallel to and is located predominantly over the second frame portion 5. In this situation, the first frame portion 4 is rigidly connected to the exterior side of two vertical posts 6 and 7, which form part of the railing 2, whilst the second frame portion 5 is rigidly fitted between these two posts 6 and 7. A milking robot 8 for the automatic milking of animals is movably connected to the first frame portion 4, whilst this milking robot bears against the second frame portion 5, which in further respects is provided at such a height that arms of the milking robot 8 can be moved along its underside to under the cow present in the milking parlour. The milking robot 8 includes a carrier frame 9 for the further portions of the milking robot. By implementing the upper frame portion 4 as a rail, the carrier frame 9 and consequently the entire milking robot 8 can easily be moved along this frame portion. The carrier frame 9 includes a beam 10 which predominantly extends parallel to the first frame portion 4, a pillar 11 which extends perpendicularly thereto and in a vertical downward direction and is rigidly secured thereto and two struts 12. Pairs of supporting elements 13 are located near the ends of the beam 10. Connected to each pair of supporting elements 13 at an angle of approximately 45', with the aid of supporting plates rigidly connected thereto, are two rollers 16 forming a roller element pair 15, the arrangement being such that the carrier frame 9 is suspended from the upper frame portion 4 in such a manner that it is easily movable therealong. At either side the beam 10 of the carrier frame 9 is provided with two carriers 17. A motor 19 is attached to these carriers in such a manner that it is movable about a pivot shaft 18. This motor 19 drives a roller 20 which preferably has a rubber surface, which roller is pushed by means of a spring member 21 against the upper frame portion 4. Since the spring member 21 is active between the motor 19 and the carrier frame 9, the roller 20 to be driven by the motor 19 is kept in the pushed mode against the upper frame portion 4, so that, when the motor is driven, it is moved length-wise along the upper frame portion 4 and consequently also along the entire carrier frame 9. A sensor 22, which e.g. comprises a laser, is connected to that supporting element 13 which, taken in a direction from the milking parlour, is the rearmost supporting element. With the aid of this sensor 22 it is possible to move the milking robot from a rest position in the longitudinal direction of the milking parlour to a starting position, in which the arms of the milking robot are moved to under the animal present in the milking parlour, and to follow the motions of the animal in the longitudinal direction of the milking parlour. For that purpose, the sensor 22 cooperates with a supporting element 23 which is movable against the rear side of the animal. With the aid of a rod system, which in the present embodiment is constituted by a quadrangular structure, and more in particular a parallelogram structure 24, this supporting element 23 is applied thereon in such a manner that it is pivotal relative to the milking parlour floor. With the aid of two rods 25, the supporting element 23 is provided with a plate 26 which is positioned laterally outside the frame portions 4 and 5 and is arranged such that it can reflect a signal transmitted by the sensor 22. After the sensor 22 has picked-up the reflected signal, it produces a control signal which is a measure of the actual, i.e. the measured, distance between the plate 26 and the sensor 22, by means of which control signal the motor 19 can be driven, the milking robot 8 then being driven in the longitudinal direction of the milking parlour in such a manner that the distance between the plate 26 and the sensor 22 is brought to and maintained at, respectively, a preset value. When the milking robot 8 is in the rest position, then it is in a position which is pushed as far as possible to the rear relative to the frame portions 4 and 5, in which situation the milking robot 8 engages via a contact element 27 the plate 26 and thus maintains the supporting element 23 in a position which is pushed as far as possible to the rear. In other words, the supporting element 23 is locked by the milking robot 8 when the robot is in the rest position. When the milking robot is driven from this rest position into the longitudinal direction of the milking parlour to the starting position, in which the arms of the milking robot are moved to under the animal present in the milking parlour, then the supporting element 23 is unlocked and is pushed under spring action by means of a spring arranged between the parallelogram structure 24 and the railing 2 against the rear side of the cow then present in the milking parlour. When the cow moves forwardly or rearwardly, the supporting element 23 will then continue to be pushed against the rear side of the animal by the pressure of the spring 28, so that the position of the plate 26 is decisive for the position of the animal in the milking parlour in the longitudinal direction and so that, by means of the sensor 22, whilst keeping the distance in the longitudinal direction between the plate 26 and the sensor 22 constant, the milking robot can follow the cow's movements in the longitudinal direction of the milking parlour. In the present embodiment, the pillar 11 of the carrier frame 9 extends vertically downwardly to slightly below the second frame portion 5. At the bottom side of this pillar 11 there is a horizontal, rearwardly extending strip 29, on which a freely rotatable roller element 30 is provided. The lower frame portion 5 is constituted by a rail and more specifically by a rail in the form of a U-shaped beam, the freely rotatable roller element 30 having been arranged such that it is movable between the two upright edges of the U-shaped beam. Thus, the milking robot 8 bears against the lower frame portion 5 and can in this situation, when the milking robot 8 is moved by means of the motor along the first frame portion 4, move easily along the second frame portion 5. In addition to the carrier frame 9, the milking robot includes a robot arm construction 31 which is predominantly movable in the vertical direction relative to the carrier frame 9 with the aid of an operating cylinder 32. The robot arm construction 31 is movably connected to the carrier frame 9 by means of a quadrangular structure 33. In the embodiment shown, the upper arm 34 of this quadrangular structure 33 is of a fixed length, whilst the lower arm 35 thereof has an adjustable length. This allows the orientation of the robot arm construction 31 to be adjusted to a limited extent. The robot arm construction 31 comprises a predominantly vertical robot arm 36, as well as robot arms 37 which are movable in a predominantly horizontal plane. The robot arm 36 is connected to the pillar 11 of the carrier frame 9 via the quadrangular construction 33. The operating cylinder 32 is operative between the carrier frame 9 and the robot arm 36. Since the orientation of the robot arm 36 is slightly adjustable with the aid of the lower arm 35 of the quadrangular construction 33, the position of the point of contact of the operating cylinder 32 on the robot arm 36 is spatially not fully defined. For this reason, the housing of the operating cylinder 32 is provided, capably of at least a limited degree of pivoting, on a carrier plate 38 connected to the beam 10 of the carrier frame 9. Mounted on this carrier plate 38 are supports 39, between which the housing of the operating cylinder 32 can move about a pivot shaft 40. In the present embodiment, the operating cylinder is designed as a servopneumatic positioning cylinder. This means that at the lower end of the piston rod 41 a position feedback rod 43 is fitted by means of a plate 42 connected rigidly thereto, with the aid of which a signal is derived in the portion 57 of the operating cylinder by a potentiometer which indicates the position of the piston rod relative to the cylinder housing, whilst, with the aid of this signal supplied by this potentiometer, the position of the piston rod 41 relative to the cylinder housing can be adjusted to a preset position. The operating cylinder 32 is further provided with an overload protection, whereby, as soon as the animal present in the milking parlour exercises pressure on the robot arm construction 31 by e.g. kicking it with its leg, the robot arm construction 31 can be moved to its lowest position. In Figures 2 and 4, the milking robot 8 is shown in the resting position, wherein it has been moved as far as possible to the rear relative to the frame portions 4 and 5 and wherein the robot arm construction 31 has been brought to the lowest possible position near the soil. When the cow is present in the milking parlour and the milking procedure is to be started, the milking robot 8 is brought from the rest position to the start position, i.e. it is adjusted to the position in which the arms of the milking robot 8 can be moved to under the cow.

In the present embodiment, the milking parlour is provided for that purpose with arms 44, 45 and 46. The arms 44 and 45 are arranged at a fixed angle of 90' relative to each other. The arms 44 and 45 are therefore moved in conjunction, more specifically by an operating cylinder 47 which is provided between a supporting plate 48 secured to the robot arm 36 and a connecting member 49 arranged between the two arms 44 and 45. The two arms 44 and 45 are rotatable about a predominantly vertical pivot shaft 50 between the supporting plate 48 and a supporting plate 50, the latter plated also being rigidly connected to the robot arm 36, more particularly at its bottom side. With respect to the arm 45, the arm 46 is rotatable about a predominantly vertical pivot shaft 51 and is rotated relative to this shaft 51 with the aid of an operating cylinder 52, which is arranged between the arm 46 and that end of the arm 45 which is located near the connecting member 49. Teat cups 53 and 54, which are connectable to the teats of the cow, are provided near the end of the arm 46. Arranged between the two teat cups 54 is a slide which is movable along the arm 46 and on which there is provided a sensor 55 which by a sector-sequential scanning motion can accurately determine the position of the teats, whereby the operating cylinders 32, 47 and 52 can be computer-controlled in such a manner that the teat cups can be connected in the proper manner to the teats. When the robot arms 44 to 46 have been moved to under the cow, these arms are in a relatively low position, in which the sensor 55 will not yet detect teats. Using the operating cylinder 32, the robot arms 44 to 46 are now lifted step-by-step until the sensor 55 detects one or more teats of the animal. Should during this upward motion the robot arms 44 to 46 have been moved up to such a height that the upper edge of the sensor 55 pushes against the cow's abdomen, then, by means of a switch 56 provided at the upper side of the sensor 55, it is effected that the robot arms can again be moved downwardly, whereafter the positional determination of the teats with the aid of the sensor 55 can be repeated by a gradual lifting of the robot arms.

The implement, as it is described in the foregoing, further includes a cleaning device 57 for the teat cups 53 and 54. This cleaning device 57 is rigidly connected to the downwardly directed pillar 11. The cleaning device 57 incorporates four downwardly directed spray nozzles 58. Each of the spray nozzles 58 has two separate rinsing liquid ducts 59 and 60. The duct 59 extends centrally through the spray nozzle from top to bottom, whilst near the lower end in this duct laterally directed first flow-out apertures 61 have been applied, which, when a teat cup is connected to a relevant spray nozzle, end relatively closely under the upper edge of the teat cup. The second duct 60 is provided approximately concentrically with respect to the first duct 59 in the spray nozzle and at the bottom side has an annular second flow-out aperture 62 which is located in a plane perpendicular to the longitudinal axis of the spray nozzle and the teat cup connected thereto. The first duct 59 of each of the spray nozzles 58 is connected to a rinsing liquid supply line 63. The second duct 60 of each of the spray nozzles is connected to a pipe section 64, whilst the pipe sections 64 of the individual spray nozzles end in a distributor element 65 connected to a rinsing liquid supply line 66. The rinsing liquid supply lines 63 can be connected via a pump to a rinsing liquid reservoir (this pump and this rinsing liquid reservoir have not been shown in the drawings).

When the milking robot is not operative for milking, which situation is illustrated in Figure 1, then the teat cups 53 and 54 are straight under the spray nozzles 58, so that, simply and solely by an upward motion of the robot arm carrying the teat cups, these teat cups can be connected to the relevant spray nozzles 58. Figure 2 illustrates the situation in which the robot arms have not yet been moved so far that the teat cups have arrived straight under the spray nozzles of the cleaning device. When, between milking of different animals or after milking of the animals, the teat cups and the milking lines connected thereto must be cleaned, then the robot arm cum teat cups is moved to under the spray nozzles and moved upwardly until the spray nozzles engage the aperture at the upper side of the teat cups. In this position, the first flow-out apertures 61 will be in a position almost directly below the upper edge of a teat cup and the flow-out aperture 62 will be almost directly above the upper edge of a teat cup. By thereafter supplying a rinsing liquid via the lines 63 and 66, this rinsing liquid is passed on the one hand over the upper side of the teat cups, whilst on the other hand rinsing liquid is introduced into the teat cups. During rinsing, using a three-way valve which during milking connects the milking lines connected to the teat cups to a centrally located milk tank, the connection between the teat cups and the milk tank is interrupted and a connection is established to e.g. the rinsing liquid reservoir. Acting thus, the liquid can be circulated by means of the pump via the supply lines 63 and the ducts 59 in the spray nozzles, whilst thereafter the rinsing liquid is conveyed to the reservoir through the teat cups and the milking lines connected thereto. By virtue of the fact that the rinsing liquid, passed over the upper side of the teat cups via the line 66 and the duct 60, falls on the soil and can be discharged from there through a gutter, it is of importance that the rinsing liquid supply line 66 is not connected to the rinsing liquid reservoir, via which the liquid is circulated through the teat cups and the relevant milking lines. The line 66 can therefore be alternatively connected directly to a water tap or indirectly via an element in which simultaneously e.g. a special cleaning agent or a disinfectant can be added. After rinsing, the rinsing liquid must be sucked from the relevant milk lines.

When the teat cups are connected to the spray nozzles, a vacuum is produced in the teat cups. This results in that the teat cups are lifted slightly upwardly over the lower end of the relevant spray nozzles, the second flow-out aperture 62 in each of the spray nozzles then being closed. The spacing between the first flow-out apertures 61 and the second flow-out aperture 62 is therefore relatively small. This spacing is e.g. in the range of from 5 to 10 mms, whilst in a concrete embodiment a spacing of 7 mms has been chosen. When the rinsing liquid is supplied at an increased pressure via the pipe section 64 through the duct 60, the liquid emerging from the second flow-out aperture 62 will be forced between the lower edge of the second flow-out aperture 62 and the slightly resilient upper edge of the relevant teat cup and be sprayed in the lateral direction. In that case it is advantageous to provide around the cleaning device or around the individual spray nozzles a screen 67 which drapes over the upper end of the teat cup(s) in the connected state.

The invention is not limited to the embodiment described here, but also relates to all the possible variations of the cleaning device which are within the scope of protection of the accompanying claim 1. The invention is furthermore not only limited to the cleaning device for the teat cups themselves, but also relates to the implement in which the cleaning device is incorporated in such an efficient manner that the teat cups of the milking robot in the rest position can be easily connected to the cleaning device.

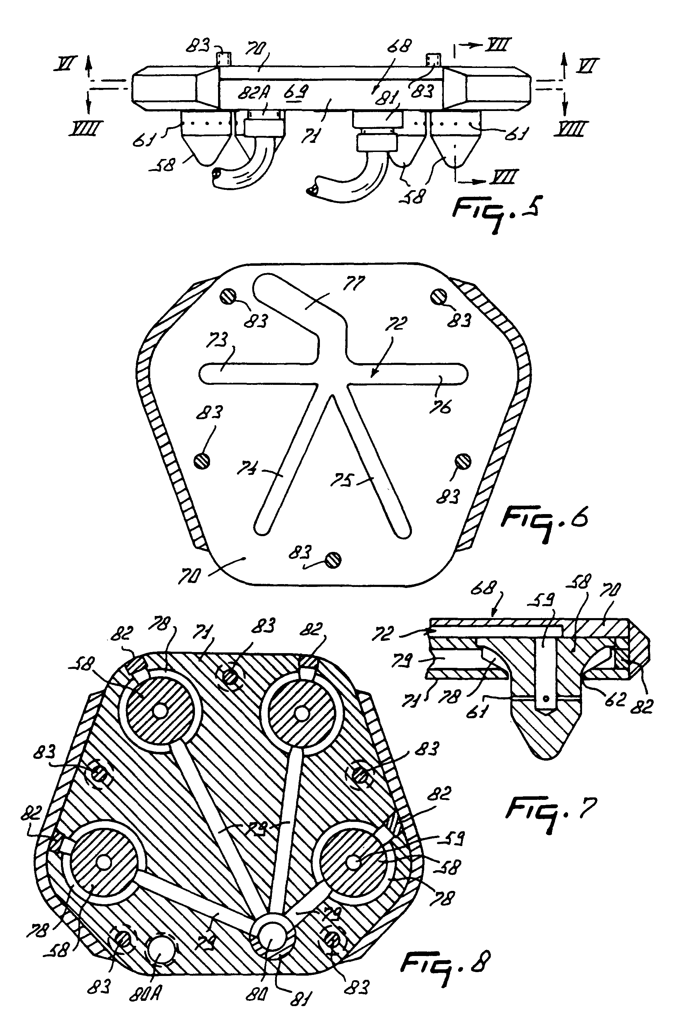

In Figure 5 is shown a second embodiment of a cleaning device 68. This alternative cleaning device 68 includes a carrier plane 69 having thereon four downwardly directed spray nozzles 58. As is indicated in Figure 7, each of the spray nozzles 58 includes two separate rinsing liquid ducts 59 and 60. As has been described in the preceding embodiment, the rinsing liquid ducts 59 and 60 end in, respectively, a first flow-out aperture 61 and a second flow-out aperture 62. In the carrier plane 69, the spray nozzles 58 are clamped between a first portion 70 and a second portion 71. As has been indicated in Figure 6, in the surface of the first portion 70 there is arranged a first duct system 72. Preferably, the first portion 70 is an aluminum plate, in which the pattern of the first duct system has been arranged. The four ends 73 to 76 of the first duct system 72 end in the four rinsing liquid ducts 59 of the spray nozzles 58. The carrier plane 69 furthermore consists of a second portion 71, wherein a second duct system 77 is arranged (Figure 8). In the second portion 71 of the carrier plane 69 there are arranged four apertures 78, through which the spray nozzles 58 are pushed.

In the second portion 71 there are furthermore arranged from the side four bores 79. The bores 79 are arranged in such a manner that each of them extends through the centre of an aperture 78 (Figure 8), while together they end in a first vertical bore 80 arranged in the second portion 71. Prior to arranging the bores 79 in the second portion 71 of the carrier plane 69, in the first vertical bore 80 there is arranged a first connecting nipple 81. On arranging bores 79, the first connecting nipple 81 is pierced. After arranging bores 79, they are sealed at the edge of the second portion 71 by means of sealing caps 82.

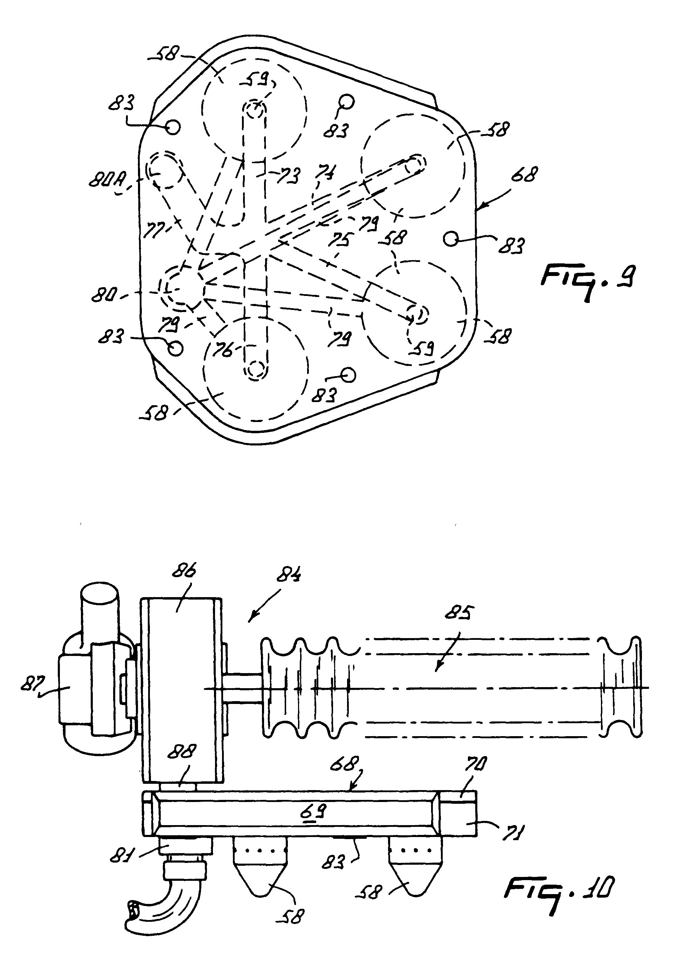

In the second portion 71 there is furthermore arranged a second vertical bore 80A, wherein is located a second connecting nipple 82A. The first portion 70 and the second portion 71 of the carrier plane 69 are clamped together by means of bolts 83, whereby the first portion 70 constitutes a sealing plate for the first and second vertical bores 80, 80A. The second bore 80A ends in the first duct system 72 arranged in the first portion 70. The second portion 71 of the carrier plane 69 constitutes with its surface in the clamped condition a sealing plate for the first duct system 72 arranged in the surface of the first portion 70. Figure 9 is indicated in a plan view of the carrier plane 69 how the patterns of the first duct system 72 and the second duct system 77 are arranged in the two portions 70 and 71.

In order to obtain a proper sealing of the clamped together portions 70 and 71, it is preferred to make the second portion 71 of a relatively soft plastic material and the first portion 70 of aluminum.

In Figure 10, the above-described cleaning device 57 includes a cleaning member 84 for cleaning the teats of a milking animal. The cleaning member 84 includes two adjacent cleaning elements in the form of profiled rollers 85, which by their axes are supported rotatably in a gear box 86. The profiled rollers 85 are driven by an electric motor 87 attached against a side of the gear box 86. The cleaning member 84 is bolted with the gear box 86 on the carrier plane 69 by means of two bolts 83. Between the gear box 86 and the carrier plane 69 there are placed spacer rings 88.

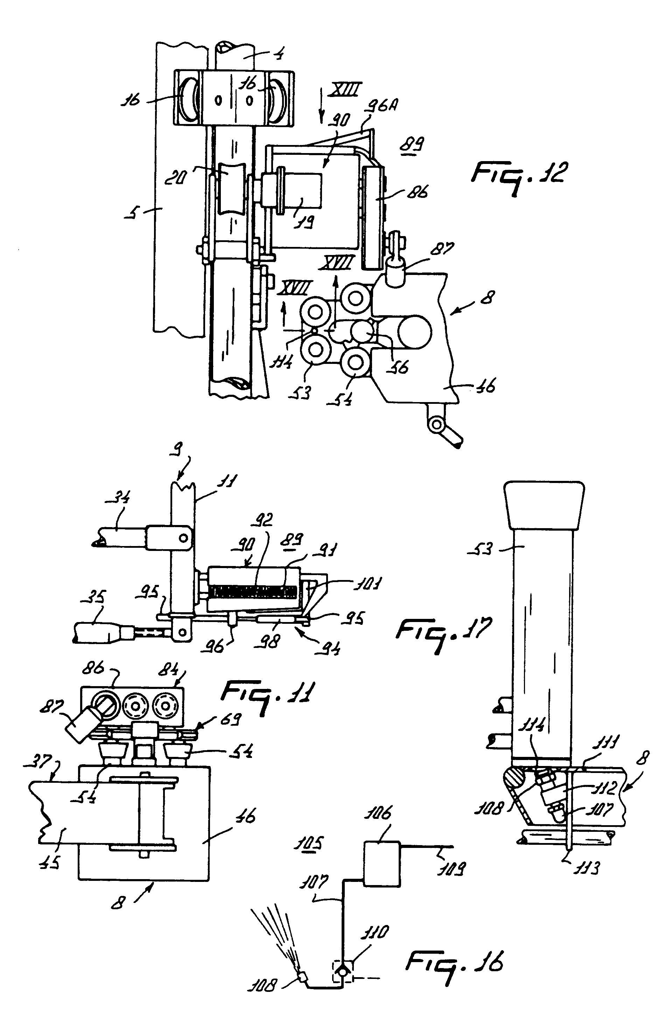

In case it should be desirable to clean the teats of the animal to be milked, the carrier plane 69 is sucked via the teat cups 54 on the arm 45 of the milking robot 8 (Figure 11). Hereafter, by means of the sensor 55, the position of the teats of the milking animal is determined, in order that the rollers 85 can be brought to one or more of the teats. After positioning of the rollers 85, the teats are caught between the oppositely rotating profiled rollers, so that the friction between the rollers 85 and the teats ensures that dirt is removed from the teats.

After cleaning of the teats and possibly rinsing of the teat cups 54, the carrier plane 69 is disconnected from the robot arm 45. Then, the carrier plane 69 is stored away in an otherwise non-shown carrier.

The implement as described in the foregoing is furthermore provided with the third cleaning device 89 for cleaning the second cleaning device 84. The third cleaning device 89 comprise a housing 90 attached to the beam 11 of the carrier frame 9 by means of an L-shaped box-profile strip 93 (Figure 11). In the housing 90 there is arranged a slot 91 in two contiguous sides. The slot 91 is covered by means of a row of brush hairs 92. The width of the slot 91 is selected such that it extends the diameter of the profiled rollers 85. Thus, it is possible to place the profiled rollers 85 in the housing 90 by means of the robot arm 37. In order to place the rollers 85 in the housing 90, they must be brought by means of the arm 45 at the level of and in front of the slot 91. By moving the arm 45 in a horizontal plane towards the slot 91, the rollers 85 are subsequently brought into the box-like housing 90. The gear box 86 and the carrier plane 69 then remain outside the housing 90. In Figures 12 to 15 is shown how the rollers 85 are located in the housing 90. After the rollers 85 have been placed in the housing 90, the under-pressure in the teat cups 54 is removed and, consequently, the robot arm 45 is disconnected from the spray nozzles 58 of the carrier plane 69.

At its bottom side, the carrier plane 69 is provided with a locking and positioning device 94, by means of which the carrier plane 69 can be placed in a fixed position relative to the housing 90. The locking and positioning device 94 includes two U-shaped strips 95 which are similar in form as the edges of the carrier plane 69. The U-shaped strips 95 are arranged on either side of the housing 90. The first U-shaped strip 95 is located at the bottom side of the box-like housing 90, opposite the slot 91, and is fixedly connected by means of a support 96A to the L-shaped strip 93 which is arranged at the housing 90. The second U-shaped strip 95 is arranged near the slot 91 at the bottom side of the housing 90. The second U- shaped strip 95 is pivotable about a vertical shaft 96. To the vertical shaft 96 is connected a lever 97, which is attached to the end of a piston rod of a cylinder 98. By means of its other end, the cylinder 98 is connected to a vertical shaft 99. The vertical shaft 99 is clamped between two horizontal, interspaced strips 100. The strips 100 are fixedly connected to a box-profile 101 which is attached to the L-shaped box-profile strip 93.

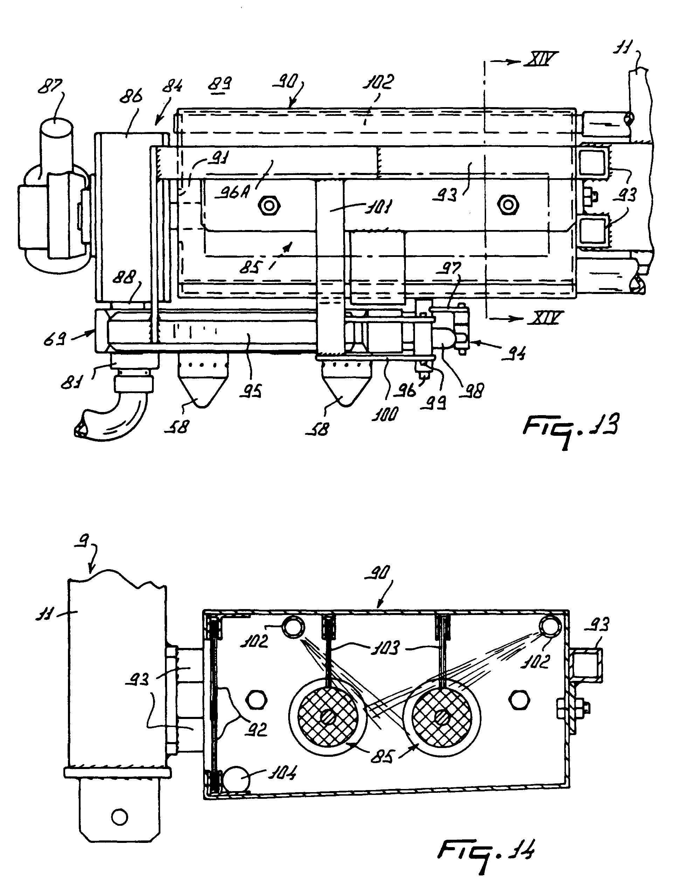

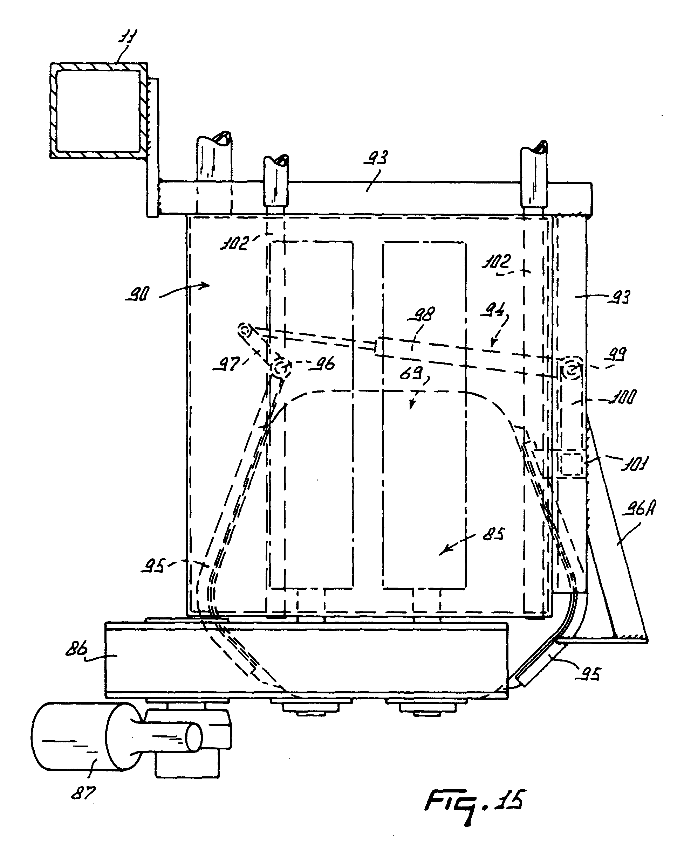

In Figures 13 to 15 is indicated how the carrier plane 69 is held in the box-like housing 90 by means of a locking and positioning device 94. By means of its edge, the carrier plane 69 is locked between the two U-shaped strips 95, after energizing of the cylinder 98, so that the carrier plane 69 is situated always in a same position relative to the housing 90. The carrier plane 69 can be unlocked by energizing the cylinder 98 again, as a result of which the second U-shaped strip 95 pivots in the direction of the beam 11 (Figure 15). After the second U-shaped strip 95 has pivoted away, the carrier plane 69 is freely movable in a horizontal plane into the direction of the slot 91, as a result of which by means of the robot arm 45 the profiled rollers 85 can be taken from the box-like housing 90 for subsequently cleaning the teats. Preferably, the cylinder 98 is a pneumatic one.

After the animal's teats have been cleaned by means of the profiled rollers 85, these rollers are stored away in the box-like housing 90 by means of the robot arm 45. Figure 14 shows in cross-section how the profiled rollers 85 are located in the box-like housing 90. For cleaning the profiled rollers 85 there are arranged at the upper sides of the housing 90 two spray elements 102. The spray elements 102 include a perforated tube, the one end of which is dosed and the other is connected to a line. Through the line there is supplied to the spray elements 102 a cleaning liquid, during the deaning of the profiled rollers 85. The perforations in the spray elements 102 are arranged such that the cleaning liquid squirts against the profiled rollers 85. At the upper side of the housing 90 there is arranged above each of the profiled rollers 85 a row of brush hairs 103, which extend to as far as the profiled rollers 85. During deaning of the profled rollers 85 there is squirted through the spray elements 102 a cleaning liquid against the rollers 85, which rotate against the brush hairs 103. In the lower side of the housing 90 there is arranged an aperture 104, to which a discharge line is connected. During cleaning, the cleaning liquid originating from the spray elements 102 is discharged via the discharge line. Preferably, the bottom of the boxlike housing 90 is inclined at an angle, so that the cleaning liquid flows in the direction of the discharge aperture 104.

In a further embodiment according to the invention, the robot arm 45 includes an after-treating device 105 for disinfecting the udder and/or the teats after the animal has been milked. The after-treating device 105 includes a pressure vessel 106 having stored therein the cleaning/disinfecting liquid, as well as a line 107 supplying the liquid to a spray nozzle 108 (Figure 16). To the pressure vessel 106 there is connected a further line 109, via which an overpressure is brought in the pressure vessel 106. The overpressure prevailing in the pressure vessel 106 is preferably three atmospheres. In the supply line 107 to the spray nozzle 108 there is incorporated a valve 110, by means of which the liquid flow to the spray nozzle 108 can be closed and opened, respectively. The valve 110 may be designed as an electromagnetic one. In a preferred embodiment according to the invention, the valve is arranged near the spray nozzle 108, so that the line piece between the valve 110 and the spray nozzle 108 is relatively short. Therefore, after the valve 110 has been opened, the pressurized liquid in line 107 need only cover a relatively short way to the spray nozzle 108. The advantage of this relatively short way to be covered by the liquid is that, after the valve has been opened, the liquid is sprayed by the spray nozzle 108 in a fan-shape almost immediately. As a result, on opening and closing of the valve 110, the occurrence of initial and final phenomena in the production of the fan-shaped spray pattern by the spray nozzle 108 is prevented.

As has been shown in Figure 12, the spray nozzle 108 is located at the end of the robot arm 45 between the two front teat cups 53. In Figure 17 is indicated how the spray nozzle 108 is arranged in the end of the robot arm 45. The spray nozzle 108 is located below the carrier plane 111, on which the teat cups 53 rest. The spray nozzle 108 is positioned in a holder 112 connected to a plate 113, which is perpendicular to the carrier plane 111. The spray nozzle 108 is positioned such in the holder 112 that the fan-shaped spray pattern is directed forwardly and upwardly relative to the end of the robot arm 45. In this connection, the fan-shaped spray pattern encloses with the plate 113 an angle of approximately 20'. In the carrier plane 111 there is arranged an aperture 114, through which the spray liquid of the spray nozzle is sprayed.

The operation of the after-treating device 105 is as follows.

After the milking procedure has been terminated, the teat cups 53 are removed from the teats and are withdrawn to the robot arm 45, where they are supported against the carrier plane 111. Subsequently, the robot arm 45 is positioned such that the fan-shaped spray pattern from the spray nozzle 108 exactly touches the rear side of the udder of the milked animal. The positioning of the robot arm 45 can be effected by means of the sensor 56 and/or by means of animal-depending co-ordinates previously supplied to a control computer of the robot arm 45. After the robot arm 45 has been positioned, the valve 110 is opened, while simultaneously the robot arm is moved in a horizontal plane in the direction of the front side of the animal. Thus, the entire udder is sprayed by the fan-shaped spray pattern. Since the fan-shaped spray pattern is directed forwardly and upwardly relative to the end of the robot arm 45, and since the spraying of the udder is effected from the rear in the direction of the front of the udder, it is prevented that spray liquid originating from the udder and/or the fan-shaped spray pattern falls into the teat cups 53. The way to be covered by the robot arm 45 in the horizontal plane, as well as the height of the spray nozzle 108 to the animal's udder can then be supplied previously per animal to a control computer of the robot arm 45. It is also possible for the height and the distance to be determined by the sensor 56.

## Claims

1. An implement for milking animals, such as cows, automatically, which implement is provided with a first cleaning device (68) for automatically cleaning teat cups (53, 54), a second cleaning device (84) for cleaning the teats of an animal to be milked, characterized in that the implement comprises a third cleaning device (89) for cleaning the second cleaning device (84) and that the second cleaning device (84) comprises cleaning elements (85) and that the third cleaning device (89) comprises a box-like housing (90) into which the cleaning elements may be inserted for storing the cleaning elements after cleaning of teats, the housing (90) having a slot (91), through which the cleaning elements (85) of the second cleaning device (84) can be pushed.

2. An implement as claimed in claim 1, **characterized in that** the slot (91) is covered by covering means (92), such as e.g. a row of brush hairs.

3. An implement as claimed in claim 1 or 2, **characterized in that** in the housing (90) there are arranged one or a plurality of rinsing members (102), by means of which a rinsing liquid can be brought in the housing (90), as well as one or a plurality of brushes (103).

4. An implement as claimed in any one of claims 1 to 3 **characterized in that** the housing (90) is provided with positioning means (94) which also serve as locking elements, by means of which positioning means (94) the first cleaning device (68) and the second cleaning device (84) are brought into and maintained in a defined position relative to the housing (90).

5. An implement as claimed in claim 4, **characterized in that** it comprises a milking parlour having at at least one of its longitudinal sides a fixed frame (3) having a first, upper frame portion (4) to which a milking robot (8) for the automatic milking of animals is connected, as well as a second, lower frame portion (5), against which the milking robot (8) bears and along whose underside arms of the milking robot (8) can be moved to under the animal present in the milking parlour, whilst furthermore the milking robot (8) includes a carrier frame (9) for further portions of the milking robot (8), which carrier frame (9) is movable along the upper frame portion (4), the first cleaning device (68) or the third cleaning device (89) being secured to the carrier frame (9) of the milking robot (8).

6. An implement as claimed in claim 5, **characterized in that** the further portions of the milking robot (8) include a robot arm (45), on which teat cups (53, 54) have been provided, whilst the first cleaning device (68) or the third cleaning device (89) are connected in such a location to the carrier frame (9) that, when the milking robot (8) is not operative for milking, the teat cups (53, 54) can be connected to the first cleaning device (68), as necessarily applied to the third cleaning device (89), by an upward movement

7. An implement as claimed in any one of the preceding claims, **characterized in that** the robot arm (45) includes an after-treating device (105) for after-treating the udder and/or the teats of a milked animal.

8. An implement as claimed in any one of the preceding claims, **characterized in that**, when the teat cups (53, 54) are not operative for milking, the mutual spacing between the teat cups (53, 54) corresponds to that between spray nozzles (58) of the first cleaning device (68).

9. An implement as claimed in claim 5 or any claim dependent therefrom, **characterized in that** the first cleaning device (68) is attached to the implement in such a position that the first cleaning device (68) is located outside the milking parlour where the animal is milked.

## Patentansprüche

1. Vorrichtung zum automatischen Melken von Tieren, z. B. von Kühen, mit einer ersten Reinigungsvorrichtung (68) zum automatischen Reinigen von Zitzenbechern (53, 54) und einer zweiten Reinigungsvorrichtung (84) zum Reinigen der Zitzen eines zu melkenden Tieres, **dadurch gekennzeichnet, daß** die Melkvorrichtung eine dritte Reinigungsvorrichtung (89) zum Reinigen der zweiten Reinigungsvorrichtung (84) aufweist, daß die zweite Reinigungsvorrichtung (84) Reinigungselemente (85) aufweist, und daß die dritte Reinigungsvorrichtung (89) ein kastenförmiges Gehäuse (90) aufweist, in das die Reinigungselemente nach dem Reinigen der Zitzen zur Aufbewahrung einzuführen sind, wobei das Gehäuse (90) einen Schlitz (91) aufweist, durch welchen die Reinigungselemente (85) der zweiten Reinigungsvorrichtung (84) zu schieben sind.

2. Vorrichtung nach Anspruch 1,
**dadurch gekennzeichnet, daß** der Schlitz (91) durch eine Abdeckung (92) verschlossen ist, z. B. durch eine Borstenreihe.

3. Vorrichtung nach Anspruch 1 oder 2,
**dadurch gekennzeichnet, daß** in dem Gehäuse (90) eine oder mehrere Bürsten (103) sowie ein oder mehrere Spülelemente (102) angeordnet sind, durch die in das Gehäuse (90) eine Spülflüssigkeit zuführbar ist.

4. Vorrichtung nach einem der Ansprüche 1 bis 3,
**dadurch gekennzeichnet, daß** das Gehäuse (90) eine Positioniervorrichtung (94) aufweist, die auch als Verriegelungselement dient, und daß mittels der Positioniervorrichtung (94) die erste Reinigungsvorrichtung (68) und die zweite Reinigungsvorrichtung (84) in eine vorgegebene Lage relativ zu dem Gehäuse (90) gebracht und darin gehalten werden.

5. Vorrichtung nach Anspruch 4,
**gekennzeichnet durch** einen Melkstand, der an mindestens einer seiner Längsseiten einen festen Rahmen (3) mit einem ersten oberen Rahmenteil (4) aufweist, an dem ein Melkroboter (8) zum automatischen Melken von Tieren angeordnet ist, sowie mit einem zweiten unteren Rahmenteil (5), an dem der Melkroboter (8) abgestützt ist, und an dessen Unterseite entlang Arme des Melkroboters (8) unter das sich in dem Melkstand aufhaltende Tier zu bewegen sind, wobei der Melkroboter (8) ferner ein Traggestell (9) für weitere Teile des Melkroboters (8) hat, und wobei das Traggestell (9) an dem oberen Rahmenteil (4) entlangzubewegen ist, und wobei die erste Reinigungsvorrichtung (68) oder die dritte Reinigungsvorrichtung (89) an dem Traggestell (9) des Melkroboters (8) befestigt sind.

6. Vorrichtung nach Anspruch 5,
**dadurch gekennzeichnet, daß** die weiteren Teile des Melkroboters (8) einen Roboterarm (45) aufweisen, an dem Zitzenbecher (53, 54) angeordnet sind, und daß die erste Reinigungsvorrichtung (68) oder die dritte Reinigungsvorrichtung (89) an einer solchen Stelle an dem Traggestell (9) angeordnet sind, daß die Zitzenbecher (53, 54) in der Ruhelage des Melkroboters (8) durch eine Aufwärtsbewegung an die erste Reinigungsvorrichtung (68) anzuschließen sind, die, falls erforderlich, in der dritten Reinigungsvorrichtung (89) anzuordnen ist.

7. Vorrichtung nach einem der vorhergehenden Ansprüche, **dadurch gekennzeichnet, daß** der Roboterarm (45) eine Nachbehandlungsvorrichtung (105) zum Nachbehandeln des Euters und/oder der Zitzen eines gemolkenen Tieres hat.

8. Vorrichtung nach einem der vorhergehenden Ansprüche, **dadurch gekennzeichnet, daß** in der Ruhelage der Zitzenbecher (53, 54) der Abstand der Zitzenbecher (53, 54) voneinander dem Abstand zwischen Sprühdüsen (58) der ersten Reinigungsvorrichtung (68) entspricht.

9. Vorrichtung nach Anspruch 5 oder einem von diesem abhängigen Anspruch,
**dadurch gekennzeichnet, daß** die erste Reinigungsvorrichtung (68) an der Vorrichtung in einer solchen Position befestigt ist, daß sich die erste Reinigungsvorrichtung (68) außerhalb des Melkstandes befindet, wenn das Tier gemolken wird.

## Revendications

1. Dispositif de traite automatique d'animaux tels que des vaches, lequel dispositif est muni d'un premier dispositif de nettoyage (68) pour nettoyer automatiquement des godets de trayons (53, 54), et d'un deuxième dispositif de nettoyage (84) pour nettoyer les trayons d'un animal à traire, **caractérisé en ce que** le dispositif comprend un troisième dispositif de nettoyage (89) pour nettoyer le deuxième dispositif de nettoyage (84) et **en ce que** le deuxième dispositif de nettoyage (84) comprend des éléments nettoyeurs (85) et **en ce que** le troisième dispositif de nettoyage (89) comprend un boîtier de type caisson (90) dans lequel peuvent être insérés les éléments nettoyeurs pour les ranger après le nettoyage des trayons, le boîtier (90) ayant une fente (91) à travers laquelle les éléments nettoyeurs (85) du deuxième dispositif de nettoyage (84) peuvent être poussés.

2. Dispositif selon la revendication 1, **caractérisé en ce que** la fente (91) est couverte par des moyens couvrants (92) tels, par exemple, qu'une rangée de poils de brosse.

3. Dispositif selon la revendication 1 ou 2, **caractérisé en ce que** sont disposés dans le boîtier (90) un ou plusieurs organes de rinçage (102) au moyen desquels un liquide de rinçage peut être amené dans le boîtier (90), ainsi qu'une ou plusieurs brosses (103).

4. Dispositif selon l'une quelconque des revendications 1 à 3, **caractérisé en ce que** le boîtier (90) est muni de moyens positionneurs (94) qui servent aussi d'éléments bloqueurs, au moyen desquels moyens positionneurs (94) le premier dispositif de nettoyage (68) et le deuxième dispositif de nettoyage (84) sont amenés et maintenus dans une position définie par rapport au boîtier (90).

5. Dispositif selon la revendication 4, **caractérisé en ce qu'**il comprend une stalle de traite ayant sur au moins un de ses côtés longitudinaux un bâti fixe (3) ayant une première partie supérieure (4) du bâti, à laquelle est relié un robot trayeur (8) pour la traite automatique d'animaux, ainsi qu'une deuxième partie inférieure (5) du bâti, contre laquelle porte le robot trayeur (8), et sous le côté inférieur de laquelle des bras du robot trayeur (8) peuvent être entraînés jusque sous l'animal présent dans la stalle de traite, tandis que le robot trayeur (8) comprend en outre un châssis porteur (9) pour les autres parties du robot trayeur (8), lequel châssis porteur (9) est mobile le long de la partie supérieure (4) du bâti, le premier dispositif de nettoyage (68) ou le troisième dispositif de nettoyage (89) étant fixé au châssis porteur (9) du robot trayeur (8).

6. Dispositif selon la revendication 5, **caractérisé en ce que** les autres parties du robot trayeur (8) comprennent un bras de robot (45) sur lequel ont été prévus des godets de trayons (53, 54), tandis que le premier dispositif de nettoyage (68) ou le troisième dispositif de nettoyage (89) sont reliés au châssis porteur (9) en un emplacement tel que, quand le robot trayeur (8) n'est pas en action de traite, les godets de trayons (53, 54) peuvent être reliés au premier dispositif de nettoyage (68), comme nécessairement appliqué au troisième dispositif de nettoyage (89) par un mouvement vers le haut.

7. Dispositif selon l'une quelconque des revendications précédentes, **caractérisé en ce que** le bras de robot (45) comporte un dispositif de post-traitement (105) pour le post-traitement du pis et/ou des trayons d'un animal venant d'être trait.

8. dispositif selon l'une quelconque des revendications précédentes, **caractérisé en ce que**, quand les godets de trayons (56, 54) ne sont pas en action de traite, l'espacement mutuel entre les godets de trayons (53, 54) correspond à celui entre les buses pulvérisatrices (58) du premier dispositif de nettoyage (68).

9. Dispositif selon la revendication 5 ou selon toute revendication dépendante de celle-ci, **caractérisé en ce que** le premier dispositif de nettoyage (68) est attaché au dispositif en une position telle que le premier dispositif de nettoyage (68) est situé à l'extérieur de la stalle de traite où l'animal est trait.
